# EUROPÄISCHE PATENTSCHRIFT

(11) **EP 3 762 254 B1**
(45) Veröffentlichungstag und Bekanntmachung des Hinweises auf die Patenterteilung: **15.11.2023**
(21) Anmeldenummer: 19709438.6
(22) Anmeldetag: 05.03.2019
(51) Int. Cl.: B60N 2/56, B60N 2/58, B60N 2/02

(54) **INTEGRATION VON SENSOREN IN FAHRZEUGSITZEN**
INTEGRATION OF CAPTORS IN A VEHICLE SEAT
INTEGRATION DE CAPTEURS DANS UN SIEGE DE VEHICULE

(30) Priorität: 06.03.2018 DE 102018203305
(43) Veröffentlichungstag der Anmeldung: 13.01.2021
(73) Patentinhaber: VOLKSWAGEN AKTIENGESELLSCHAFT, 38440 Wolfsburg (DE)
(72) Erfinder: PFEIFFER, Sascha Alexander, 38440 Wolfsburg (DE); SCHUR, Frank, 39175 Biederitz (DE)
(86) Internationale Anmeldenummer: PCT/EP2019/055354
(87) Internationale Veröffentlichungsnummer: WO 2019/170622

(56) Entgegenhaltungen:
- EP-A1- 1 311 407
- EP-A1- 2 910 413
- EP-A1- 3 202 616
- EP-B1- 1 311 407
- US-A1- 2005 077 774

## Beschreibung

Die Erfindung betrifft einen Fahrzeugsitz mit einem aus mehreren Schichten aufgebauten Sitzpolster eines Sitzteiles und/oder Rückenlehnenteiles, in dem unterhalb eines als obere Schicht ausgebildeten Bezuges des Sitzpolsters mindestens ein Sensor angeordnet ist.

Aus dem Stand der Technik sind Verfahren zur Klimatisierung von Fahrzeugsitzen bekannt. Um die Klimatisierung von Fahrzeugsitzen noch komfortabler zu gestalten, werden Feuchtesensoren in den Fahrzeugsitz, insbesondere in das Sitzteil und die Rückenlehne integriert. Bei der Integration von Sensoren im Allgemeinen ist stets eine optimale Einbaulösung des jeweiligen Sensors und eine optimale Signalanbindung zur Auswertung des Sensorwertes festzulegen, die entsprechend den spezifischen Gegebenheiten der Fahrzeugsitze gefunden werden muss.

Aus dem Stand der Technik, beispielsweise aus der Druckschrift DE 199 48 735 A1 ist bekannt, dass einer Steuerungseinheit einer Klimaanlage eine Fahrzeugsitzklimatisierungseinheit zugeordnet ist, über welche die Temperatur und/oder die Durchflussmenge der durch den Fahrzeugsitz hindurchgeleiteten Kühlluft in zumindest in Abhängigkeit der vorgewählten Temperatur regelbar ist. Die Fahrzeugsitzklimatisierungseinheit ist elektronisch und logisch mit jedem sitzbezogenen Steuergerät verbunden, welche in Abhängigkeit der erhaltenen Sensorsignale entsprechende Belüftungsstellmittel für den jeweiligen Fahrzeugsitz ansteuert, beziehungsweise regelt. Dabei wird gemäß der aus dem Stand der Technik bekannten Lösung jeder einzelne Fahrzeugsitz autark geregelt und enthält ein jeweils separates Steuergerät, sowie entsprechend jeweilige Belüftungsstellmittel. Es wird als vorteilhaft beschrieben, dass zusätzlich in jedem Fahrzeugsitz ein Feuchtesensor vorgesehen ist. Dieser Feuchtesensor wird im Kissenelement des Sitzteiles oder im Kissenelement der Rückenlehne des Fahrzeugsitzes platziert, wobei die Oberflächen des Sitzteiles und der Rückenlehne feuchtedurchgängig sind, um einen entsprechenden Sensorwert, der die tatsächliche Feuchtesituation am Rücken einer auf dem Fahrzeugsitz aufsitzenden Person messen zu können. Die sitzseitigen Feuchtesensoren sind dabei gemäß der genannten Druckschrift signalmäßig mit dem jeweiligen sitzseitigen Steuergerät verbunden.

Die Druckschrift DE 102 38 552 A1 beschreibt einen Fahrzeugsitz mit einem Sitzflächenteil und einem Sitzlehnenteil. Das Sitzflächenteil und das Sitzlehnenteil weisen jeweils eine luftdurchlässige Oberfläche auf. Die Temperatursensoren und die Feuchtesensoren sind unter einer oder unter beiden der luftdurchlässigen Oberflächen angeordnet. Dabei ist vorgesehen, dass die Sensoren genau unter der luftdurchlässigen Oberfläche, die aus ein oder mehreren geeigneten Materialien wie etwa perforiertem Leder oder Vinyl oder einem Stoff, der Zwischenräume im Gewebemuster aufweist, gefertigt sein können, angeordnet sind. Wenn ein Fahrzeuginsasse auf dem Fahrzeugsitz aufsitzt, können die Sensoren aufgrund ihrer Lage die Temperatur und Feuchtigkeit an oder in der Nähe der Schnittstelle zwischen dem sitzenden Insassen und dem Sitzflächenteil beziehungsweise dem Sitzlehnenteil des Sitzes messen.

Die Druckschriften EP 2 910 413 A1, EP 3 202 61 6 A1 und EP 1 311 407 A1 bilden weiteren Stand der Technik.

Der Erfindung liegt die Aufgabe zugrunde, eine optimierte Einbaulösung eines Sensors und eine optimierte Signalanbindung des Sensors anzubieten, um eine einfache Montage und leicht realisierbare Auswertung der Sensorwerte des Sensors zu gewährleisten.

Ausgangspunkt der Erfindung ist ein Fahrzeugsitz mit einem aus mehreren Schichten aufgebauten Sitzpolster eines Sitzteiles und/oder eines Rückenlehnenteiles in dem unterhalb eines als obere Schicht ausgebildeten Bezuges des Sitzpolsters mindestens ein Sensor angeordnet ist, wobei der mindestens eine Sensor an oder in einem als weitere Schicht ausgebildeten luftdurchlässigen Trägerelement befestigt ist, wobei im Gebrauch eine A-Seite des Trägerelementes einer aufsitzenden Person zugewandt ist, wobei das Trägerelement zwischen den mehreren Schichten angeordnet ist, wobei das Trägerelement ein luftdurchlässiges Trägervlies ist, in dem oder an dem der mindestens eine Heizdraht einer Sitzheizung des Sitzpolsters des Sitzteiles und/oder des Rückenlehnenteiles angeordnet ist oder ein luftdurchlässiger Schaum ist, in dem oder an dem der mindestens eine Heizdraht einer Sitzheizung des Sitzpolsters des Sitzteiles und/oder des Rückenlehnenteiles angeordnet ist.

In einer ersten Ausführungsform ist erfindungsgemäß vorgesehen, dass der mindestens eine Sensor in einem im Fahrzeugsitz eingebauten Zustand mittels eines ersten Befestigungselementes befestigt ist, wobei ein orthogonal von einem Sensorkopf des Sensors abstehendes Sensorelement auf der dem Bezug zugewandten A-Seite des Trägerelementes aufliegt, sodass eine Sensorfläche des Sensorelementes der aufsitzenden Person zugewandt ist, und von dem auf der A-Seite angeordneten ersten Befestigungselement in einer vorgebbaren Position gehalten wird, wobei das erste Befestigungselement ein flächiges Klebebandstück ist, welches eine Öffnung aufweist, welche das orthogonal von dem Sensorkopf abstehende Sensorelement des mindestens einen Sensors im Einbauzustand des ersten Befestigungselementes und des Sensors in Richtung des Bezuges durchgreift.

In einer zweiten Ausführungsform ist erfindungsgemäß vorgesehen, dass der mindestens eine Sensor in einem im Fahrzeugsitz eingebauten Zustand mittels eines zweiten Befestigungselementes befestigt ist, wobei ein orthogonal von einem Sensorkopf des Sensors abstehendes Sensorelement das Trägerelement von einer dem Bezug abgewandten B-Seite bis zu der dem Bezug zugewandten A-Seite in einer dafür im Trägerelement vorgesehenen Öffnung durchgreift, sodass eine Sensorfläche des Sensorelementes der aufsitzenden Person zugewandt ist, wobei der Sensorkopf auf der als B-Seite definierten Rückseite des Trägerelementes angeordnet ist und von dem auf der B-Seite angeordneten zweiten Befestigungselement in einer vorgebbaren Position gehalten wird, wobei das zweite Befestigungselement ein flächiges öffnungsloses Klebebandstück ist, das auf der B-Seite des Trägerelementes auf dem Sensorkopf angebracht ist.

Bevorzugt ist das Trägerelement in einer zweiten Ausführungsvariante ein luftdurchlässiger Schaum, insbesondere ein retikulierter Schaum, in dem oder an dem der mindestens eine Heizdraht einer Sitzheizung des Sitzpolsters des Sitzteiles und/oder Rückenlehnenteiles angeordnet ist.

Bei der Herstellung des Fahrzeugsitzes kann somit in vorteilhafter Weise das mit dem mindestens einen Sensor vorgesehene Trägerelement als Zwischenschicht eingelegt werden, so dass der in einer vorgegebenen Position angeordnete Sensor sozusagen automatisch seine Position innerhalb des Sitzteiles und/oder des Rückenlehnenteiles einnimmt.

Wie nachfolgend erläutert wird, weist das Trägerelement nur eine geringe Dicke im Millimeterbereich vorzugsweise zwischen 1 mm bis 2,5 mm in der erste Ausführungsvariante als luftdurchlässiges Vlies oder zwischen 3 mm und 5 mm in der zweiten Ausführungsvariante als luftdurchlässiger Schaum auf, so dass durch die Einbringung des vorkonfektionierten Trägerelementes sozusagen gleichzeitig die Anordnung des Sensors erfolgt, ohne dass dafür ein separater Bauraum vorgehalten werden muss, wie noch detailliert erläutert wird.

Der entsprechend angeordnete Sensor weist ebenfalls nur eine geringe Größe aus, so dass es in vorteilhafter Weise möglich ist, den Sensor innerhalb der Schichtdicke des Trägerelementes oder auf dem Trägerelement anzuordnen.

Durch die gemeinsame Anordnung des mindestens einen Sensors und der Heizdrähte der Sitzheizung in oder an einem Trägerelement, insbesondere einem die Drähte der Sitzheizung tragenden Trägerelement, ergeben sich vorteilhafte Synergie-Effekte, die nachfolgend erläutert werden. Ein besonderer Vorteil besteht darin, dass das Trägervlies als vorkonfektioniertes Bauteil, welches sowohl die Sitzheizung als auch die entsprechenden Sensoren umfasst, angeliefert, gelagert und eingebaut werden kann, wobei sich insbesondere die Montage wesentlich vereinfacht.

Es wird explizit drauf hingewiesen, dass die beiden Ausführungsformen keine alternativen Lösungen darstellen, sondern dass es sogar möglich ist, in einem einzigen Trägerelement mindestens einen Sensor gemäß der ersten Ausführungsform und mindestens einen Sensor gemäß der zweiten Ausführungsform anzuordnen.

Die erste Ausführungsform hat den Vorteil, dass das Trägerelement bei der Vorkonfektionierung unverändert gegenüber bisherigen Ausführungen beibehalten werden kann, da der mindestens eine Sensor lediglich auf der Oberfläche des Trägerelementes befestigt wird.

Dahingegen muss das Befestigungselement entsprechend konfiguriert und mit einer Öffnung versehen werden, damit das eigentliche Sensorelement des Sensors in Richtung des Bezuges in der Lage ist, die gewünschten Messwerte zu erfassen, wie in der Beschreibung näher erläutert ist.

Bei der zweiten Ausführungsform hingegen vereinfacht sich die Ausgestaltung des Befestigungselementes, welches in einfacher Weise auf der B-Seite des Trägerelementes angebracht wird, ohne dass in dem Befestigungselement eine Öffnung oder dergleichen benötigt wird. Jedoch muss bei der zweiten Ausführungsform das Trägerelement eine entsprechende Öffnung aufweisen, damit das eigentliche Sensorelement des Sensors in eine bezugsnahe Position kommt und in dem Trägerelement untergebracht werden kann.

In vorteilhafter Weise ist in Bezug auf beide Ausführungsformen vorgesehen, dass der mindestens eine Sensor an der A-Seite und/oder an der B-Seite des Trägerelementes mittels des jeweiligen Befestigungselementes teilflächig oder vollflächig verklebt ist, wobei das jeweilige Befestigungselement selber eine Klebefläche aufweist, die im Einbauzustand dem Trägerelement zugewandt ist, oder der mindestens eine Sensor an der A-Seite und/oder an der B-Seite des Trägerelementes mittels des jeweiligen Befestigungselementes teilflächig oder vollflächig verklebt ist, wobei vor der Anbringung des jeweiligen Befestigungselementes zwischen der A-Seite oder der B-Seite des Trägerelementes und des im Einbauzustand dem Trägerelement zugewandten Befestigungselementes teil- oder vollflächig ein separates Klebemittel eingebracht ist. Ein Klebeverfahren ist preiswert realisierbar und hinsichtlich der vor Konfektionierung an einem dünnen flexiblen textilen oder schaumartigen Trägerelement von Vorteil.

Es ist bevorzugt gemäß der ersten Ausführungsform vorgesehen, dass das auf der A-Seite angeordnete erste Befestigungselement, analog zu dem als Vlies ausgebildeten Trägerelement, ebenfalls als textiles Flächenelement, insbesondere als Vlies oder als luftdurchlässiges Vlies ausgebildet ist, welches eine Öffnung aufweist, welche das Sensorelement des mindestens einen Sensors im Einbauzustand des ersten Befestigungselementes und des Sensors in Richtung des Bezuges durchgreift und in seiner vorgegebenen Position sichert, so dass das Sensorelement im Einbauzustand in Richtung des Bezuges des Sitzpolsters des Sitzteiles und/oder des Rückenlehnenteiles gerichtet ist.

Es ist bevorzugt gemäß der zweiten Ausführungsform vorgesehen, dass das auf der B-Seite angeordnete zweite Befestigungselement jetzt als öffnungsloses vollflächiges aber analog zu dem als Vlies ausgebildeten Trägerelement, ebenfalls als textiles Flächenelement, insbesondere als Vlies oder als luftdurchlässiges Vlies als textiles Flächenelement ausgebildet ist, welches den Sensorkopf des Sensors, der im Einbauzustand des Sensors und des Befestigungselementes das Trägerelement über die jetzt im Trägerelement vorgesehene Öffnung in Richtung des Bezuges durchgreift und in seiner vorgegebenen Position sichert, sodass das Sensorelement im Einbauzustand in Richtung des Bezuges des Sitzpolsters des Sitzteiles und/oder des Rückenlehnenteiles gerichtet ist.

In Abhängigkeit der Gegebenheiten innerhalb eines Fahrzeugsitzes kann somit mithilfe der Ausführungsformen darauf reagiert werden, ob eine Anordnung des mindestens einen Sensors auf der A-Seite oder der B-Seite vorteilhaft ist.

In einer von mehreren bevorzugten Ausgestaltungen wird vorgeschlagen, dass das Trägerelement mit der integrierten Sitzheizung und dem mindestens einen Sensor (auf der A-Seites und/oder auf der B-Seite) zwischen einer unterhalb des Bezuges liegenden Schicht in der Art einer Kaschierung und auf einer weiteren Schicht in der Art eines Schaumes, der beispielsweise das eigentliche Polsterteil bildet, angeordnet ist.

Als Synergie-Effekt ergibt sich beispielsweise in vorteilhafter Weise, dass ein Sensorkabel des mindestens einen Sensors gemeinsam mit einem Kabel der Sitzheizung von dem Trägerelement ausgehend in einem gemeinsamen Kabelstrang vorkonfektioniert und zumindest sitzseitig bis zu ihren weiteren Schnittstellen in einem gemeinsamen Kabelstrang geführt ist.

Ferner ist bevorzugt vorgesehen, dass ein endseitiger Anschluss des Sensorkabels des mindestens einen Sensors auf ein Slave-Steuergerät des Fahrzeugsitzes geführt ist, welches mit einem Master-Steuergerät des Fahrzeuges über eine Bus-Schnittstelle mittels einer Bus-Verbindung kommuniziert, wie in der Beschreibung noch näher erläutert ist.

Schließlich ist in vorteilhafter Weise vorgesehen, dass das Slave-Steuergerät des Fahrzeugsitzes einem Lüfter zugeordnet ist, so dass die Daten des Lüfters, insbesondere Drehzahlwerte und/oder die Daten des mindestens einen Sensors, insbesondere Temperaturwerte und/oder Feuchtewerte über die Bus-Schnittstelle, zwischen dem Slave-Steuergerät des Fahrzeugsitzes und dem Master-Steuergerät des Fahrzeuges mittels der Bus-Verbindung austauschbar sind.

Die Erfindung wird nachfolgend generell und in möglichen Ausführungsformen anhand der zugehörigen Zeichnungen erläutert. Es zeigen:
- Figur 1: einen Sensor nach dem Stand der Technik;
- Figur 2A: ein Befestigungselement in einer ersten Ausführungsform zur Befestigung eines Sensors an einem Trägerelement;
- Figur 2B: das Befestigungselement gemäß Figur 2A und der Sensor gemäß Figur 1 in einem Einbauzustand gemäß der ersten Ausführungsform auf einer A-Seite des Trägerelementes;
- Figur 3A: das Befestigungselement in einer zweiten Ausführungsform zur Befestigung eines Sensors an einem Trägerelement;
- Figur 3B: das Befestigungselement gemäß Figur 3A und der Sensor gemäß Figur 1 in einem Einbauzustand gemäß der zweiten Ausführungsform auf einer B-Seite des Vlieses;
- Figur 4: eine schematische Darstellung eines Fahrzeugsitzes mit einer erfindungsgemäßen Signalanbindung des Sensors im Einbauzustand gemäß einer der Ausführungsformen.

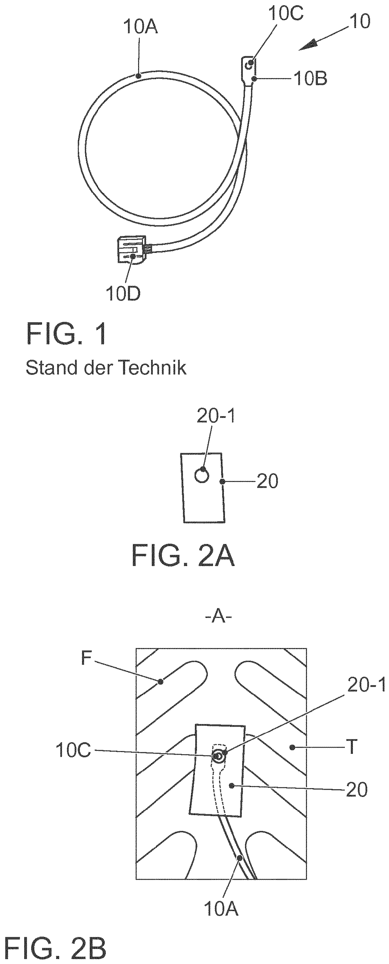

Figur 1 zeigt einen herkömmlichen Sensor, der entweder ein Temperatursensor oder ein Feuchtesensor oder ein kombinierter Temperatur-/Feuchtigkeitssensor ist, wobei in der nachfolgenden Beschreibung zur Verdeutlichung der erfindungsgemäßen technischen Merkmale beispielhaft von einem kombinierten Temperatur-/Feuchtigkeitssensor 10 ausgegangen wird.

Der Temperatur-/Feuchtigkeitssensor 10 umfasst an einem Ende ein Verbindungselement 10D und an einem anderen Ende des Sensorkabels 10A einen Sensorkopf 10B mit einem Sensorelement 10C mit einer gegenüber der Fläche des Sensorkopfes 10B geringeren Sensorfläche. Im gewählten Ausführungsbeispiel steht das Sensorelement 10C orthogonal von dem Sensorkopf 10B ab und bildet mit anderen Worten ein vom Sensorkopf 10B abstehendes stabförmiges Sensorelement 10C, welches im gewählten Ausführungsbeispiel kreiszylindrisch ausgebildet ist.

An einem dem Sensorkopf 10B gegenüberliegenden Ende ist ein steckbares Verbindungselement 10D angeordnet, welches eine direkte Steckverbindung in einem korrespondierenden Aufnahmeelement eines nicht näher dargestellten Steuergerätes ermöglicht.

Über das Sensorkabel 10A wird das Sensorelement 10C mit elektrischer Energie versorgt und die von dem Sensorelement 10C erfassten und ausgegebenen Sensorsignale, insbesondere ein Temperaturmesswert und ein Feuchtemesswert, können ausgewertet werden.

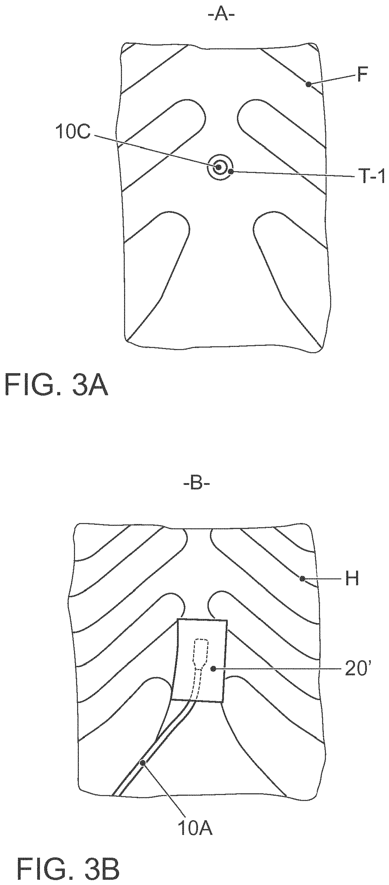

Zunächst wird anhand der Figuren 2A, 2B und 3A, 3B erläutert, welche optimierte Einbaulösung des Sensorelementes 10C gemäß der Erfindung vorgesehen ist.

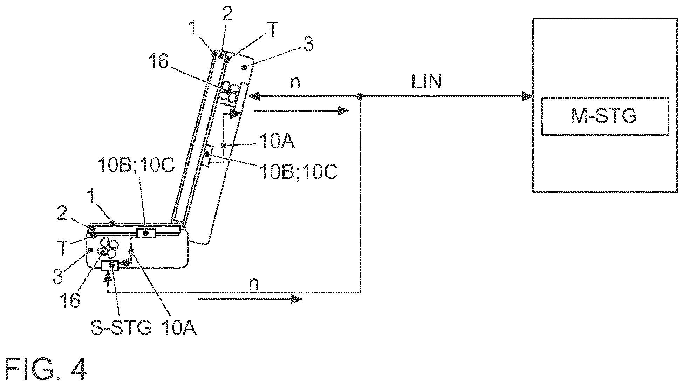

Beschrieben werden zwei Ausführungsformen der Anbringung eines Sensorelementes 10C auf beziehungsweise in einem Trägerelement T, wobei im Ausführungsbeispiel insbesondere ein luftdurchlässiges Trägervlies T (erste Ausführungsvariante) als Trägerelement beschrieben wird, welches eine von mehreren Schichten eines schichtenartig aufgebauten Sitzpolsters bildet, welches sowohl in einem Sitzteil 12 als auch in einer Rückenlehne 14 (vergleiche Figur 4) eines Fahrzeugsitzes 100 zur Anwendung kommt.

Ein Vlies soll gemäß dieser Erfindung als Vliesstoff definiert sein, der größtenteils ein flexibles textiles Flächengebilde darstellt, das heißt das Vlies ist leicht biegsam, seine Hauptstrukturelemente sind textile Fasern und sie weisen eine vergleichsweise geringe Dicke gegenüber ihrer Länge und Breite auf.

Es versteht sich, dass die nachfolgende Beschreibung auch für einen luftdurchlässigen Schaum als Trägerelement T (zweite Ausführungsvariante) gilt, der ebenfalls eine von mehreren Schichten eines schichtenartig aufgebauten Sitzpolsters bildet, welches sowohl in einem Sitzteil 12 als auch in einer Rückenlehne 14 eines Fahrzeugsitzes 100 zur Anwendung kommt.

Ein retikulierter Schaumstoff soll gemäß der Erfindung ein PUR-Schaum sein, der durch eine thermische Nachbehandlung eine offene Zellstruktur und hohe Luftdurchlässigkeit aufweist.

Wenn nachfolgend im gewählten Ausführungsbeispiel von einem Trägervlies T gesprochen wird, ist somit ein Trägerelement T in der einen oder anderen Ausführungsvariante gemeint.

Die Grundidee besteht darin, das Sensorelement 10C in vorteilhafter Weise an oder in dem Vlies, insbesondere dem Trägervlies T, zu befestigen.

Eine Erweiterung der Grundidee besteht darin, dass das Sensorelement 10C an oder in dem Trägervlies T befestigt ist, in dem auch die Sitzheizung beziehungsweise die Heizdrähte H einer Sitzheizung angeordnet sind.

Die dadurch entstehenden Vorteile werden nachfolgend noch näher erläutert.

### Erste Ausführungsform:

In einer ersten Ausführungsform ist vorgesehen, den Sensorkopf 10B auf einer im Einbauzustand des Trägervlieses T zu der aufsitzenden Person gerichteten A-Seite anzubringen, wobei vorgesehen ist, nicht den Sensorkopf 10B anzubringen, sondern ein Befestigungselement 20 vorzuhalten, um den Sensorkopf 10B an dem Trägervlies T anbringen zu können.

Erfindungsgemäß wird vorgeschlagen, als Befestigungselement 20 ein flächiges Klebeband, insbesondere einen Vliesklebeband mit einer vorgebbaren teil- oder vollflächigen Klebefläche zu verwenden, wobei die Klebefläche des Vliesklebebandes ausschließlich auf der im Befestigungszustand des Klebebandes auf der dem Trägervlies T zugewandten Seite ausgebildet ist. Das Vliesklebeband umfasst somit eine Schicht aus einem flexiblen textilen Flächengebilde und eine bereits aufgebrachte Klebeschicht.

Es ist von Vorteil, wenn die Klebefläche bereits auf der dem Trägervlies T zugewandten Seite angeordnet ist, jedoch versteht sich, dass grundsätzlich auch eine Verklebung möglich ist, bei der ein Klebemittel separat zwischen einer A-Seite des Trägervlieses T und dem Befestigungselement 20 vollflächig oder teilflächig eingebracht wird.

Die Anbringung des Sensorkopfes 10B mittels des Klebebandes beziehungsweise des in Figur 2A dargestellten Klebebandstückes 20 als Befestigungselement ist hinsichtlich der Montage des Sensorkopfes 10B eine bevorzugte Lösung, da die Montage mit dieser Lösung vom Werker schneller zu bewerkstelligen ist.

Die Figuren 2A und 2B zeigen ein flächiges Klebebandstück 20, wobei die Figur 2A das Klebebandstück 20 vor der Anbringung und Figur 2B im Einbauzustand auf der zur aufsitzenden Person gerichteten A-Seite des Trägervlieses T zeigt.

Wie in Figur 2B erkennbar ist, wird der Sensorkopf 10B an dem Trägervlies T befestigt, indem auch die Heizdrähte H integriert angeordnet sind, wobei in Figur 2B nicht die Heizdrähte H, sondern die Gegenfäden F dargestellt sind, mittels denen die Heizdrähte am Trägervlies T vernäht sind.

Dabei sieht die Erfindung vor, dass in dem als Befestigungselement 20 ausgebildeten Klebebandstück eine Öffnung vorgesehen ist, deren Innenkontur mit der Außenkontur des Sensorelementes 10C des Sensorkopfes korrespondiert.

Es versteht sich, dass eine Öffnung 20-1 vorteilhaft ist, um sicherzustellen, dass das Sensorelement 10C in Richtung der aufsitzenden Person nicht von dem Klebebandstück 20 abgedeckt wird, damit die Temperaturmessung und die Feuchtemessung nicht behindert wird.

Für die Montage ist es jedoch besonders vorteilhaft, wenn die Innenkontur der Öffnung im Klebebandstück 20 genau mit der Außenkontur des Sensorelementes 10C korrespondiert, da der Werker dadurch den Sensorkopf 10B genauer innerhalb des Klebebandstückes positionieren kann und die Lage des Sensorkopfes 10B im Befestigungszustand eindeutig vorgebbar ist.

Hinzu kommt, dass sich die Position des Sensorkopfes 10B im späteren Gebrauch nicht verändert, da der Sensorkopf 10B in der beschriebenen an das Sensorelement 10C angepassten Öffnung des Klebebandstückes 20 positionsgetreu gehalten wird.

Die beschriebenen Vorteile gelten auch für ein flächiges Bandstück, insbesondere flächiges Vliesbandstück als Befestigungselement, bei dem die Einbringung des Klebemittels erst zum Zeitpunkt der Anbringung zwischen dem Bandstück und der A-Seite des Trägervlieses T erfolgt.

### Zweite Ausführungsform:

In einer zweiten Ausführungsform ist vorgesehen, den Sensorkopf 10B auf einer im Einbauzustand des Trägervlieses T von der aufsitzenden Person abgewandten B-Seite anzubringen, wobei wiederum vorgesehen ist, nicht den Sensorkopf 10B unmittelbar anzubringen, sondern analog zur ersten Ausführungsform ein Befestigungselement 20 vorzuhalten und zu verwenden, um den Sensorkopf 10B an dem Trägervlies T mittelbar anbringen zu können.

Zur Verdeutlichung ist in Figur 3A, die auch in Figur 2B dargestellte A-Seite gezeigt, während in Figur 3B die B-Seite gezeigt ist.

Es wird deutlich, dass die Öffnung T-1 jetzt nicht mehr im Befestigungselement 20 (vergleiche Figur 3B) sondern im Trägervlies T ausgebildet ist. Für die im Trägervlies T ausgebildete Kontur der Öffnung gelten die zu der Öffnung 20-1 im Befestigungselement 20 beschriebenen Vorteile.

In Figur 3A sind somit wiederum die Gegenfäden F, der im Trägervlies T vernähten Heizdrähte H sichtbar. In der Öffnung T-1 innerhalb des Trägervlieses T sitzt wiederum positionsgetreu das Sensorelement 10C, so dass die Sensorfläche im Gebrauch des Trägervlieses T der aufsitzenden Person zugewandt ist. Mit anderen Worten, der Sensorkopf 10B ist auf der als B-Seite definierten Rückseite des Trägervlieses T angeordnet, während das orthogonal von dem Sensorkopf 10B abstehende Sensorelement 10C das Trägervlies durchgreift.

In Figur 3B ist somit die B-Seite des Trägervlieses T dargestellt, so dass hier die Heizdrähte erkennbar sind. Bevorzugt wird als Befestigungselement 20` ein sich von der ersten Ausführungsform nicht unterscheidendes Klebebandstück vorgehalten und verwendet, welches ebenfalls in der Art eines Vlieses ausgebildet ist, wobei das Klebemittel bereits teil- oder vollflächig als Klebefläche dem Klebebandstück vorgehalten ist, oder in der anderen bereits beschriebenen Ausführung wird ein Klebemittel teil- oder vollflächig zwischen B-Seite des Trägervlieses T und der der B-Seite des Trägervlieses T zugewandten Seite des Bandstückes als Klebefilm eingebracht. Ein Unterschied des Bandstückes beziehungsweise des Klebebandstückes gemäß der zweiten Ausführungsform besteht darin, dass das Befestigungselement 20` keine Öffnung aufweist.

In bevorzugter Ausgestaltung der Erfindung liegt das luftdurchlässige Trägervlies T, wie in Figur 4 angedeutet ist, unterhalb eines perforierten luftdurchlässigen Bezuges 1 und einer aus einem Schaum bestehenden schichtartigen luftdurchlässigen Kaschierung 2 und oberhalb einer das Sitzpolster ausbildenden Schaumschicht 3, in der in bekannter Weise nicht näher dargestellte Lüftungskanäle ausgebildet sind.

Nachfolgend wird anhand der Figur 4 die optimierte Signalanbindung des Sensors 10 beschrieben, die gemäß der Erfindung vorgesehen ist.

In der Schaumschicht 3 oder unterhalb der Schaumschicht ist jeweils ein Lüfter 16 angeordnet, der zur Belüftung des Sitzteiles 12 und der Rückenlehne 14 dient. Derzeit ist vorgesehen, dass die Lüfter 16 über ein "Local Interconnect Network" (LIN), auch LIN-Bus genannt, der ein serielles Kommunikationssystem für die Vernetzung von Sensoren und Aktoren darstellt, kommuniziert.

Im Sitzteil 12 und/oder in der Rückenlehne 14 angeordnete Sensoren 10 werden bisher über das in Figur 1 gezeigte steckbare Verbindungselement 10D mit einem Steuergerät verbunden, in dem auch die Signale, der über den LIN-Bus vernetzten Lüfter 16 anliegen.

Erfindungsgemäß ist jetzt vorgesehen, die Drehzahl der Lüfter 16 als Aktoren und die Sensorwerte, insbesondere der Temperaturmesswerte in °C und/oder der Feuchtemesswerte in kg/m³ des Sensors 10 im Sitzteil 12 und/oder in der Rückenlehne 16 über einer Bus-Schnittstelle an ein Master-Steuergerät M-STG zu übertragen.

Die Lüfter 16 werden über das Bordnetz des Fahrzeuges mit Spannung versorgt und jedem Lüfter ist ein Slave-Steuergerät S-STG in der Art einer Platine zugeordnet.

Das Slave-Steuergerät S-STG steht mit dem Master-Steuergerät M-STG (vergleiche Figur 4) über je einen LIN-Bus in Verbindung.

Erfindungsgemäß ist der Sensor 10 in oder an demjenigen Trägervlies T angeordnet, in dem auch die Sitzheizung mit ihren Heizdrähten H integriert angeordnet ist.

Die Kabelverbindung beziehungsweise ein Kabelstrang der Heizdrähte H der Sitzheizung ist bereits im Sitzteil 12 und/oder in der Rückenlehne 10 vorhanden und wird auf eine Bodenkoppelstelle des Fahrzeugsitzes geführt.

Erfindungsgemäß wird das jeweilige Sensorkabel 10 in den jeweils bereits vorhandenen Kabelstrang eingebunden, wobei die Sensorkabel 10 zur Platine S-STG des Lüfters 16 geführt werden. Das in Figur 1 gezeigt steckbare Verbindungselement 10D entfällt, den es erfolgt eine direkte Anbindung an die Platine, wodurch sich für den jeweiligen Sensor 10 in dem Sitzteil 12 und in der Rückenlehne 14 die benötigten Leitungslängen reduzieren, da der Sensor 10 und die Sitzheizung zunächst gemeinsam in einem gemeinsam gewickelten Kabelstrang geführt werden können, wobei das Ende des jeweiligen Sensorkabels 10 nur bis zur sitzteilseitigen Platine S-STG und der rückenlehnenseitigen Platine S-STG geführt werden muss, während das jeweilige Ende des Sitzheizungskabels weiterhin zu der Bodenkoppelstelle geführt wird, über welche die Sitzheizung mit dem Master-Steuergerät M-STG verbunden ist.

Hinzu kommt der Vorteil, dass die Sensoren 10 von der Platine S-STG des Lüfters mit Spannung versorgt werden können und ein von den Sensoren 10 kommendes digitales pulsbreitenmoduliertes (PWM)-Signal auf der Platine S-STG in ein LIN-Signal umgewandelt werden kann.

Mithin können die Sensorwerte, insbesondere die Temperaturmesswerte in °C und/oder die Feuchtemesswerte M in kg/m³ des Sensors 10 im Sitzteil 12 und/oder in der Rückenlehne 16 über eine bereits für den jeweiligen Lüfter 16 vorgesehene LIN-Bus-Schnittstelle der Platine S-STG an das Master-Steuergerät M-STG ausgegeben oder von dem Master-Steuergerät M-STG jeweils als LIN-Signal empfangen werden, welches eine Lüfterdrehzahl n der Lüfter in Abhängigkeit Temperaturmesswerte in °C und/oder die Feuchtemesswerte M vorgibt.

Die Vorteile der optimierten Einbaulösung werden durch die direkte mechanische Anbindung des Sensors 10 an das Trägervlies T der Sitzheizung erzielt, wodurch eine Anlieferung und Lagerung im der benötigten Komponenten vereinfacht wird. Die Einbringung des Sensors 10 in die Sitzheizung kann aufgrund der geometrisch einfach ausgebildeten Komponenten in automatisiert werden, so dass Vorteile gegenüber einem manuellen einzelnen Verbau der Komponenten erzielt werden.

Durch die beschriebene elektrische und signaltechnische Anbindung des Sensors 10 an das Steuergerät S-STG des Lüfters 16 werden im Vergleichen zur direkten Anbindung an ein Master-Steuergerät Leitungslängen im Bordnetz reduziert. Hierfür wird der Sensor 10 wie erläutert am ohnehin über LIN-Bus vernetzten Lüfter des Sitzteiles 12 oder der Rückenlehne 14 angebunden und von diesem ausgewertet. Die Daten des Sensors 10 werden über die bereits vorhandene LIN-Leitung an das verarbeitende Master-Steuergerät M-STG weitergegeben. Der Vorteil besteht darin, dass nur eine LIN-Schnittstelle für den jeweiligen Sensor 10 und den jeweilige Lüfter 16 benötigt wird.

## Patentansprüche

1. Fahrzeugsitz (100) mit einem aus mehreren Schichten (1, 2, 3) aufgebauten Sitzpolster eines Sitzteiles (12) und/oder eines Rückenlehnenteiles (14) in dem unterhalb eines als obere Schicht ausgebildeten Bezuges (1) des Sitzpolsters mindestens ein Sensor (10) angeordnet ist, wobei der mindestens eine Sensor (10) an einem als weitere Schicht ausgebildeten luftdurchlässigen Trägerelement (T) befestigt ist, wobei im Gebrauch eine A-Seite (A) des Trägerelementes (T) einer aufsitzenden Person zugewandt ist, wobei das Trägerelement (T) zwischen den mehreren Schichten (1, 2, 3) angeordnet ist, wobei das Trägerelement (T)
• ein luftdurchlässiges Trägervlies ist, in dem oder an dem der mindestens eine Heizdraht (H) einer Sitzheizung des Sitzpolsters des Sitzteiles (12) und/oder des Rückenlehnenteiles (14) angeordnet ist,
oder
• ein luftdurchlässiger Schaum ist, in dem oder an dem der mindestens eine Heizdraht (H) einer Sitzheizung des Sitzpolsters des Sitzteiles (12) und/oder des Rückenlehnenteiles (14) angeordnet ist,
**dadurch gekennzeichnet, dass**
der mindestens eine Sensor (10) in einem im Fahrzeugsitz (100) eingebauten Zustand mittels eines ersten Befestigungselementes (20) befestigt ist, wobei ein orthogonal von einem Sensorkopf (10B) des Sensors (10) abstehendes Sensorelement (10C) auf der dem Bezug (1) zugewandten A-Seite (A) des Trägerelementes (T) aufliegt, sodass eine Sensorfläche des Sensorelementes (10C) der aufsitzenden Person zugewandt ist, und von dem auf der A-Seite (A) angeordneten ersten Befestigungselement (20) in einer vorgebbaren Position gehalten wird, wobei das erste Befestigungselement (20) ein flächiges Klebebandstück ist, welches eine Öffnung (20-1) aufweist, welche das orthogonal von dem Sensorkopf (10B) abstehende Sensorelement (10C) des mindestens einen Sensors (10) im Einbauzustand des ersten Befestigungselementes (20) und des Sensors (10) in Richtung des Bezuges (1) durchgreift.

2. Fahrzeugsitz (100) mit einem aus mehreren Schichten (1, 2, 3) aufgebauten Sitzpolster eines Sitzteiles (12) und/oder eines Rückenlehnenteiles (14) in dem unterhalb eines als obere Schicht ausgebildeten Bezuges (1) des Sitzpolsters mindestens ein Sensor (10) angeordnet ist, wobei der mindestens eine Sensor (10) in einem als weitere Schicht ausgebildeten luftdurchlässigen Trägerelement (T) befestigt ist, wobei im Gebrauch eine A-Seite (A) des Trägerelementes (T) einer aufsitzenden Person zugewandt ist, wobei das Trägerelement (T) zwischen den mehreren Schichten (1, 2, 3) angeordnet ist, wobei das Trägerelement (T)
• ein luftdurchlässiges Trägervlies ist, in dem oder an dem der mindestens eine Heizdraht (H) einer Sitzheizung des Sitzpolsters des Sitzteiles (12) und/oder des Rückenlehnenteiles (14) angeordnet ist,
oder
• ein luftdurchlässiger Schaum ist, in dem oder an dem der mindestens eine Heizdraht (H) einer Sitzheizung des Sitzpolsters des Sitzteiles (12) und/oder des Rückenlehnenteiles (14) angeordnet ist,
**dadurch gekennzeichnet, dass**
der mindestens eine Sensor (10) in einem im Fahrzeugsitz (100) eingebauten Zustand mittels eines zweiten Befestigungselementes (20`) befestigt ist, wobei ein orthogonal von einem Sensorkopf (10B) des Sensors (10) abstehendes Sensorelement (10C) das Trägerelement (T) von einer dem Bezug (1) abgewandten B-Seite (B) bis zu der dem Bezug zugewandten A-Seite (A) in einer dafür im Trägerelement (T) vorgesehenen Öffnung (T-1) durchgreift, sodass eine Sensorfläche des Sensorelementes (10C) der aufsitzenden Person zugewandt ist, wobei der Sensorkopf (10B) auf der als B-Seite (B) definierten Rückseite des Trägerelementes (T) angeordnet ist und von dem auf der B-Seite (B) angeordneten zweiten Befestigungselement (20') in einer vorgebbaren Position gehalten wird, wobei das zweite Befestigungselement (20') ein flächiges öffnungsloses Klebebandstück ist, das auf der B-Seite (B) des Trägerelementes (T) auf dem Sensorkopf (10B) angebracht ist.

3. Fahrzeugsitz (100) nach Anspruch 1, **dadurch gekennzeichnet, dass** der luftdurchlässige Schaum ein retikulierter Schaum ist.

4. Fahrzeugsitz (100) nach Anspruch 1 und/oder 2, **dadurch gekennzeichnet, dass** der mindestens eine Sensor (10) an der A-Seite (A) und/oder an der B-Seite (B) des Trägerelementes (T) mittels des jeweiligen Befestigungselementes (20, 20`) teilflächig oder vollflächig verklebt ist, wobei das jeweilige Befestigungselement (20, 20`) selber eine Klebefläche aufweist, die im Einbauzustand dem Trägerelement (T) zugewandt ist, oder
der mindestens eine Sensor (10) an der A-Seite (A) und/oder an der B-Seite (B) des Trägerelementes (T) mittels des jeweiligen Befestigungselementes (20, 20`) teilflächig oder vollflächig verklebt ist, wobei vor der Anbringung des jeweiligen Befestigungselementes (20, 20') zwischen der A-Seite (A) oder der B-Seite (B) des Trägerelementes (T) und des im Einbauzustand des Trägerelementes (T) zugewandten Befestigungselementes (20, 20`) teil- oder vollflächig ein separates Klebemittel eingebracht ist.

5. Fahrzeugsitz (100) nach Anspruch 1, **dadurch gekennzeichnet, dass** das auf der A-Seite (A) angeordnete erste Befestigungselement (20) als textiles Flächenelement ausgebildet ist, welches die Öffnung (20-1) aufweist, welche das Sensorelement (10C) des mindestens einen Sensors (10) im Einbauzustand des ersten Befestigungselementes (20) und des Sensors (10) in Richtung des Bezuges (1) durchgreift, und in seiner vorgegebenen Position sichert, so dass das Sensorelement (10C) im Einbauzustand in Richtung des Bezuges (1) des Sitzpolsters des Sitzteiles (12) und/oder des Rückenlehnenteiles (14) gerichtet ist.

6. Fahrzeugsitz (100) nach Anspruch 2, **dadurch gekennzeichnet, dass** das auf der B-Seite (B) angeordnete zweite Befestigungselement (20`) als öffnungsloses vollflächiges textiles Flächenelement ausgebildet ist, welches den Sensorkopf (10B) des Sensors (10), der im Einbauzustand des Sensors (10) und des zweiten Befestigungselementes (20') das Trägerelement (T) über die vorgesehene Öffnung (T-1) in Richtung des Bezuges (1) durchgreift, in seiner vorgegebenen Position sichert, sodass das Sensorelement (10C) im Einbauzustand in Richtung des Bezuges (1) des Sitzpolsters des Sitzteiles (12) und/oder des Rückenlehnenteiles (14) gerichtet ist.

7. Fahrzeugsitz (100) nach Anspruch 1 oder 2, **dadurch gekennzeichnet, dass** das Trägerelement (T) mit der integrierten Sitzheizung und dem mindestens einen Sensor (10) zwischen einer unterhalb des Bezuges (1) liegenden Schicht in der Art einer Kaschierung (2) und auf einer weiteren Schicht in der Art eines Schaumes (3) angeordnet ist.

8. Fahrzeugsitz (100) nach Anspruch 1 oder 2, **dadurch gekennzeichnet, dass** ein Sensorkabel (10A) des mindestens einen Sensors (10) gemeinsam mit einem Kabel der Sitzheizung von dem Trägerelement (T) ausgehend in einem gemeinsamen Kabelstrang vorkonfektioniert und zumindest sitzseitig bis zu ihren weiteren Schnittstellen in einem gemeinsamen Kabelstrang geführt sind.

9. Fahrzeugsitz (100) nach Anspruch 8, **dadurch gekennzeichnet, dass** ein endseitiger Anschluss des Sensorkabels (10A) des mindestens einen Sensors (10) auf ein Slave-Steuergerät (S-STG) des Fahrzeugsitzes (100) geführt ist, welches mit einem Master-Steuergerät (M-STG) des Fahrzeuges über eine Bus-Schnittstelle mittels einer Bus-Verbindung (LIN) kommuniziert.

10. Fahrzeugsitz (100) nach Anspruch 9, **dadurch gekennzeichnet, dass** das Slave-Steuergerät (S-STG) des Fahrzeugsitzes (100) einem Lüfter (16) zugeordnet ist, so dass die Daten des Lüfters (16), insbesondere Drehzahlwerte (n) und/oder die Daten des mindestens einen Sensors (10), insbesondere Temperaturwerte und/oder Feuchtewerte über die Bus-Schnittstelle, zwischen dem Slave-Steuergerät (S-STG) des Fahrzeugsitzes (100) und dem Master-Steuergerät (M-STG) des Fahrzeuges mittels der Bus-Verbindung (LIN) austauschbar sind.

## Claims

1. Vehicle seat (100) having a seat cushion, which is constructed from several layers (1, 2, 3), of a seat part (12) and/or of a backrest part (14), in which at least one sensor (10) is arranged beneath a cover (1), which is in the form of an upper layer, of the seat cushion, wherein the at least one sensor (10) is fastened to an air-permeable support element (T) which is in the form of a further layer, wherein, during use, an A-side (A) of the support element (T) faces a seated person, wherein the support element (T) is arranged between the several layers (1, 2, 3), wherein the support element (T)
• is an air-permeable support nonwoven in which or on which the at least one heating wire (H) of a seat heater of the seat cushion of the seat part (12) and/or of the backrest part (14) is arranged,
or
• is an air-permeable foam in which or on which the at least one heating wire (H) of a seat heater of the seat cushion of the seat part (12) and/or of the backrest part (14) is arranged,
**characterized in that**
the at least one sensor (10) is fastened by means of a first fastening element (20) in a state in which the sensor is installed in the vehicle seat (100), wherein a sensor element (10C), which protrudes orthogonally from a sensor head (10B) of the sensor (10), rests on the A-side (A), which faces the cover (1), of the support element (T), so that a sensor area of the sensor element (10C) faces the seated person, and is held in a specifiable position by the first fastening element (20), which is arranged on the A-side (A), wherein the first fastening element (20) is a flat piece of adhesive strip which has an opening (20-1) which the sensor element (10C), which protrudes orthogonally from the sensor head (10B), of the at least one sensor (10) passes through in the direction of the cover (1) in the state in which the first fastening element (20) and the sensor (10) are installed.

2. Vehicle seat (100) having a seat cushion, which is constructed from several layers (1, 2, 3), of a seat part (12) and/or of a backrest part (14), in which at least one sensor (10) is arranged beneath a cover (1), which is in the form of an upper layer, of the seat cushion, wherein the at least one sensor (10) is fastened to an air-permeable support element (T) which is in the form of a further layer, wherein, during use, an A-side (A) of the support element (T) faces a seated person, wherein the support element (T) is arranged between the several layers (1, 2, 3), wherein the support element (T)
• is an air-permeable support nonwoven in which or on which the at least one heating wire (H) of a seat heater of the seat cushion of the seat part (12) and/or of the backrest part (14) is arranged,
or
• is an air-permeable foam in which or on which the at least one heating wire (H) of a seat heater of the seat cushion of the seat part (12) and/or of the backrest part (14) is arranged,
**characterized in that**
the at least one sensor (10) is fastened by means of a second fastening element (20') in a state in which the sensor is installed in the vehicle seat (100), wherein a sensor element (10C), which protrudes orthogonally from a sensor head (10B) of the sensor (10), passes through the support element (T) from a B-side (B), which is averted from the cover (1), as far as the A-side (A), which faces the cover, in an opening (T-1) provided in the support element (T) for it, so that a sensor area of the sensor element (10C) faces the seated person, wherein the sensor head (10B) is arranged on the rear side, which is defined as the B-side (B), of the support element (T) and is held in a specifiable position by the second fastening element (20'), which is arranged on the B-side (B), wherein the second fastening element (20') is a flat piece of adhesive strip piece which has no opening and is fitted on the sensor head (10B) on the B-side (B) of the support element (T).

3. Vehicle seat (100) according to Claim 1, **characterized in that** the air-permeable foam is a reticulated foam.

4. Vehicle seat (100) according to Claim 1 and/or 2, **characterized in that** the at least one sensor (10) is adhesively bonded over part of the surface or the entire surface of the A-side (A) and/or of the B-side (B) of the support element (T) by means of the respective fastening element (20, 20'), wherein the respective fastening element (20, 20') itself has an adhesive area, which faces the support element (T) in the installed state, or the at least one sensor (10) is adhesively bonded over part of the surface or the entire surface of the A-side (A) and/or of the B-side (B) of the support element (T) by means of the respective fastening element (20, 20'), wherein, before the respective fastening element (20, 20') is fitted, a separate adhesive is introduced over part of the surface or the entire surface between the A-side (A) or the B-side (B) of the support element (T) and the facing fastening element (20, 20') in the installed state of the support element (T).

5. Vehicle seat (100) according to Claim 1, **characterized in that** the first fastening element (20), which is arranged on the A-side (A), is in the form of a textile sheet-like element which has the opening (20-1) which the sensor element (10C) of the at least one sensor (10) passes through in the direction of the cover (1) when the first fastening element (20) and the sensor (10) are in the installed state, and secures the sensor element in its specified position, so that the sensor element (10C), in the installed state, is directed in the direction of the cover (1) of the seat cushion of the seat part (12) and/or of the backrest part (14).

6. Vehicle seat (100) according to Claim 2, **characterized in that** the second fastening element (20'), which is arranged on the B-side (B), is in the form of a full-surface textile sheet-like element without openings which secures the sensor head (10B) of the sensor (10), which sensor head passes through the support element (T) via the provided opening (T-1) in the direction of the cover (1) when the sensor (10) and the second fastening element (20') are in the installed state, in its specified position, so that the sensor element (10C), in the installed state, is directed in the direction of the cover (1) of the seat cushion of the seat part (12) and/or of the backrest part (14).

7. Vehicle seat (100) according to Claim 1 or 2, **characterized in that** the support element (T), with the integrated seat heater and the at least one sensor (10), is arranged between a layer, which is situated beneath the cover (1), in the form of a lining (2) and, on a further layer, in the form of a foam (3).

8. Vehicle seat (100) according to Claim 1 or 2, **characterized in that** a sensor cable (10A) of the at least one sensor (10) together with a cable of the seat heater are prefabricated in a common cable strand starting from the support element (T) and, at least on the seat side, are guided as far as their further interfaces in a common cable strand.

9. Vehicle seat (100) according to Claim 8, **characterized in that** an end-side connection of the sensor cable (10A) of the at least one sensor (10) is guided to a slave control device (S-STG) of the vehicle (100), which slave control device communicates with a master control device (M-STG) of the vehicle by means of a bus connection (LIN) via a bus interface.

10. Vehicle seat (100) according to Claim 9, **characterized in that** the slave control device (S-STG) of the vehicle seat (100) is associated with a fan (16), so that the data relating to the fan (16), in particular rotation speed values (n), and/or the data from the at least one sensor (10), in particular temperature values and/or moisture values, can be exchanged between the slave control device (S-STG) of the vehicle seat (100) and the master control device (M-STG) of the vehicle by means of the bus connection (LIN) via the bus interface.

## Revendications

1. Siège de véhicule (100) comprenant un coussin de siège, constitué de plusieurs couches (1, 2, 3), d'une partie d'assise (12) et/ou d'une partie formant dossier (14), dans lequel au moins un capteur (10) est disposé au-dessous d'un revêtement (1) du coussin de siège, réalisé sous la forme d'une couche supérieure, l'au moins un capteur (10) étant fixé à un élément porteur (T) perméable à l'air réalisé sous la forme d'une couche supplémentaire, un côté A (A) de l'élément porteur (T) faisant, lors de l'utilisation, face à une personne assise, l'élément porteur (T) étant disposé entre les plusieurs couches (1, 2, 3), l'élément porteur (T)
* étant un non-tissé porteur perméable à l'air, dans lequel ou au niveau duquel est disposé au moins un fil chauffant (H) d'un chauffage de siège du coussin de siège de la partie d'assise (12) et/ou de la partie formant dossier (14),
ou
* étant une mousse perméable à l'air dans laquelle ou au niveau de laquelle est disposé au moins un fil chauffant (H) d'un chauffage de siège du coussin de siège de la partie d'assise (12) et/ou de la partie formant dossier (14),
**caractérisé en ce que**
l'au moins un capteur (10), dans un état installé dans le siège de véhicule (100), est fixé au moyen d'un premier élément de fixation (20), un élément capteur (10C) qui fait saillie orthogonalement depuis une tête de capteur (10B) du capteur (10) reposant sur le côté A (A) de l'élément porteur (T), faisant face au revêtement (1), de sorte qu'une surface de capteur de l'élément capteur (10C) fasse face à la personne assise et soit maintenue par le premier élément de fixation (20) disposé sur le côté A (A) dans une position pouvant être prédéfinie, le premier élément de fixation (20) étant une pièce de bande adhésive plate qui possède une ouverture (20-1), laquelle est traversée par l'élément capteur (10C) qui fait saillie orthogonalement depuis la tête de capteur (10B) de l'au moins un capteur (10) à l'état installé du premier élément de fixation (20) et du capteur (10) en direction du revêtement (1).

2. Siège de véhicule (100) comprenant un coussin de siège, constitué de plusieurs couches (1, 2, 3), d'une partie d'assise (12) et/ou d'une partie formant dossier (14), dans lequel au moins un capteur (10) est disposé au-dessous d'un revêtement (1) du coussin de siège, réalisé sous la forme d'une couche supérieure, l'au moins un capteur (10) étant fixé dans un élément porteur (T) perméable à l'air réalisé sous la forme d'une couche supplémentaire, un côté A (A) de l'élément porteur (T) faisant, lors de l'utilisation, face à une personne assise, l'élément porteur (T) étant disposé entre les plusieurs couches (1, 2, 3), l'élément porteur (T)
* étant un non-tissé porteur perméable à l'air, dans lequel ou au niveau duquel est disposé au moins un fil chauffant (H) d'un chauffage de siège du coussin de siège de la partie d'assise (12) et/ou de la partie formant dossier (14),
ou
* étant une mousse perméable à l'air dans laquelle ou au niveau de laquelle est disposé au moins un fil chauffant (H) d'un chauffage de siège du coussin de siège de la partie d'assise (12) et/ou de la partie formant dossier (14),
**caractérisé en ce que**
l'au moins un capteur (10), dans un état installé dans le siège de véhicule (100), est fixé au moyen d'un deuxième élément de fixation (20'), un élément capteur (10C) qui fait saillie orthogonalement depuis une tête de capteur (10B) du capteur (10) traversant l'élément porteur (T) d'un côté B (B) à l'opposé du revêtement (1) jusqu'au côté A (A) faisant face au revêtement (1) dans une ouverture (T-1) prévue à cet effet dans l'élément porteur (T), de sorte qu'une surface de capteur de l'élément capteur (10C) fasse face à la personne assise, la tête de capteur (10B) étant disposée sur le côté arrière de l'élément porteur (T) défini en tant que côté B (B) et étant maintenue dans une position pouvant être prédéfinie, par le deuxième élément de fixation (20') disposé sur le côté B (B), le deuxième élément de fixation (20') étant une pièce de bande adhésive plate dépourvue d'ouverture qui est appliquée sur le côté B (B) de l'élément porteur (T) sur la tête de capteur (10B) .

3. Siège de véhicule (100) selon la revendication 1, **caractérisé en ce que** la mousse perméable à l'air est une mousse réticulée.

4. Siège de véhicule (100) selon la revendication 1 et/ou 2, **caractérisé en ce que** l'au moins un capteur (10) est collé, par une surface partielle ou sur toute la surface, au niveau du côté A (A) et/ou au niveau du côté B (B) de l'élément porteur (T) au moyen de l'élément de fixation (20, 20') respectif, l'élément de fixation (20, 20') respectif possédant lui-même une surface adhésive qui, à l'état installé, fait face à l'élément porteur (T),
ou
l'au moins un capteur (10) est collé, par une surface partielle ou sur toute la surface, au niveau du côté A (A) et/ou au niveau du côté B (B) de l'élément porteur (T) au moyen de l'élément de fixation (20, 20') respectif, un agent adhésif séparé étant introduit sur une surface partielle ou toute la surface, avant la pose de l'élément de fixation (20, 20') respectif, entre le côté A (A) ou le côté B (B) de l'élément porteur (T) et de l'élément de fixation (20, 20') qui, à l'état installé de l'élément porteur (T), fait face.

5. Siège de véhicule (100) selon la revendication 1, **caractérisé en ce que** le premier élément de fixation (20) disposé sur le côté A (A) est réalisé sous la forme d'un élément plan textile, lequel possède l'ouverture (20-1), laquelle est traversée par l'élément capteur (10C) de l'au moins un capteur (10) à l'état installé du premier élément de fixation (20) et du capteur (10) en direction du revêtement (1), et le bloque dans sa position prédéfinie, de sorte que l'élément capteur (10C), à l'état installé, est orienté en direction du revêtement (1) du coussin de siège de la partie d'assise (12) et/ou de la partie formant dossier (14).

6. Siège de véhicule (100) selon la revendication 2, **caractérisé en ce que** le deuxième élément de fixation (20') disposé sur le côté B (B) est réalisé sous la forme d'un élément plan textile dépourvu d'ouverture sur toute la surface, lequel sécurise la tête de capteur (10B) du capteur (10) dans sa position prédéfinie, laquelle, à l'état installé du capteur (10) et du deuxième élément de fixation (20'), traverse l'élément porteur (T) par l'ouverture (T-1) prévue en direction du revêtement (1), de sorte que l'élément capteur (10C), à l'état installé, est orienté en direction du revêtement (1) du coussin de siège de la partie d'assise (12) et/ou de la partie formant dossier (14) .

7. Siège de véhicule (100) selon la revendication 1 ou 2, **caractérisé en ce que** l'élément porteur (T), avec le chauffage de siège intégré et l'au moins un capteur (10) est disposé entre une couche qui se trouve au-dessous du revêtement (1) à la manière d'un laminage (2) et sur une couche supplémentaire à la manière d'une mousse (3).

8. Siège de véhicule (100) selon la revendication 1 ou 2, **caractérisé en ce qu'**un câble de capteur (10A) de l'au moins un capteur (10), conjointement avec un câble du chauffage de siège sortant de l'élément porteur (T), sont pré-surmoulés en un faisceau de câbles commun et sont acheminés dans un faisceau de câbles commun au moins du côté du siège jusque vers leurs interfaces supplémentaires.

9. Siège de véhicule (100) selon la revendication 8, **caractérisé en ce que** qu'un raccordement côté extrémité du câble de capteur (10A) de l'au moins un capteur (10) est acheminé sur un contrôleur esclave (S-STG) du siège de véhicule (100), lequel communique avec un contrôleur maître (M-STG) du véhicule par le biais d'une interface de bus au moyen d'une connexion par bus (LIN).

10. Siège de véhicule (100) selon la revendication 8, **caractérisé en ce qu'**un ventilateur (16) est associé au contrôleur esclave (S-STG) du siège de véhicule (100), de sorte que les données du ventilateur (16), notamment les valeurs de vitesse de rotation (n) et/ou les données de l'au moins un capteur (10), notamment des valeurs de température et/ou des valeurs d'humidité, peuvent être échangées par le biais de l'interface de bus entre le contrôleur esclave (S-STG) du siège de véhicule (100) et le contrôleur maître (M-STG) du véhicule au moyen de la connexion par bus (LIN).
